Europäisches Patentamt

European Patent Office

Office européen des brevets

(11) Veröffentlichungsnummer: **0 499 113 A2**

# EUROPÄISCHE PATENTANMELDUNG

(21) Anmeldenummer: **92101743.0**

(51) Int. Cl.5: **C08G 18/72**, C09J 175/04

(22) Anmeldetag: **03.02.92**

(30) Priorität: **14.02.91 DE 4104436**

(43) Veröffentlichungstag der Anmeldung:
**19.08.92 Patentblatt 92/34**

(84) Benannte Vertragsstaaten:
**DE ES FR GB IT**

(71) Anmelder: **BAYER AG**

**W-5090 Leverkusen 1 Bayerwerk(DE)**

(72) Erfinder: **Arend, Günther, Dr.**
**Claudiusstrasse 42**
**W-4047 Dormagen(DE)**
Erfinder: **Ganster, Otto, Dr.**
**Droste-Hülshoff-Strasse 5**
**W-5068 Odental(DE)**
Erfinder: **Hombach, Rudolf, Dr.**
**J.-Jansenstrasse 24**
**W-5090 Leverkusen(DE)**
Erfinder: **Müller-Albrecht, Horst, Dr.**
**Roggendorfstrasse 59**
**W-5000 Köln 80(DE)**
Erfinder: **Panskus, Knut**
**Am Buchenhang 36**
**W-5632 Wermelskirchen(DE)**

(54) **Vernetzer für polymere Klebstoffe.**

(57) Die vorliegende Erfindung betrifft Vernetzerisocyanate für polymere Klebstoffe mit einem geringen Anteil NCO-reaktiver Gruppen.

EP 0 499 113 A2

Die vorliegende Erfindung betrifft Vernetzerisocyanate für polymere Klebstoffe.

Als vernetzende Zusatzmittel für vorzugsweise lösemittelhaltige Klebstoffe auf Basis von Natur- oder synthetischen Polymeren sind eine Reihe tri- bzw. höherfunktioneller Polyisocyanate bekannt, z.B.

4,4',4''-Triisocyanato-triphenylmethan, Isocyanatoarylphosphorsäure- bzw. -thiophosphorsäure-Derivate laut DE-PS 1 311 001 (z.B. Thiophosphorsäure-tris(p-isocyanatophenylester)), substituierte Diphenylmethantetraisocyanate gemäß DE-PS 1 812 565 oder NCO-terminierte Umsetzungsprodukte des 2,4-Toluylendiisocyanats mit Trimethylolpropan. Ebenfalls auf 2,4-Toluylendiisocyanate basierende Vernetzerisocyanate sind Isocyanatgruppen-aufweisende Trimerisate, wie sie z.B. in DE-PS 26 41 380 beschrieben werden.

Die Verwendung der genannten Polyisocyanate als vernetzende Zusatzmittel erhöht insbesondere die Wärmebeständigkeit der Klebeverbindung.

Für die Verklebung unter Spannung stehender Substrate, z.B. bei der Verklebung von Schuhsohlen an stark gewölbte Oberteile bzw. bei der Kaschierung stark strukturierter Trägerbauteile mit durch Vorheizen weichgemachten Kunststoff- Folien im Vakuumtiefziehverfahren, ist zum Auffangen der elastischen Rückstellkräfte ein Klebefilm mit möglichst hoher Sofortfestigkeit erforderlich.

Einige dieser Polyisocyanate - z.B. 4, 4',4''-Triisocyanatotriphenylmethan bzw. Triisocyanatomonoisocyanurate nach DE-PS 26 41 380 - ergeben schon recht gute Sofortfertigkeitswerte, aber eine weitere Steigerung dieser Eigenschaft würde erhebliche technische Vorteile bringen, weil sie eine Beschleunigung der Arbeitszyklen erlaubt.

Gegenstand der vorliegenden Erfindung sind Mischungen von Trimerisaten des 2,4-Toluylendiisocyanats mit Triisocyanatotriphenylmethan (4,4',4''-Triisocyanatotriphenylmethan) als Vernetzerisocyanate für polymere Klebstoffe, die überraschender Weise gegenüber den ohnehin schon sehr wirksamen Einzelbestandteilen sowohl eine deutlich verbesserte Sofortfestigkeit im Schälversuch als auch eine deutliche Verbesserung der Festigkeit der Klebung bei Messung in der Wärme zeigen.

Dabei können als Triisocyanatotriphenylmethan handelsübliche Produkte verwendet werden (z.B. Lösungen in Ethylacetat). Als Trimerisationsprodukt des 2,4-Toluylendiisocyanats werden Produkte verwendet, welche bei einem Gehalt von mehr als 50 Gew.-% an Trisisocyanato-Monoisocyanurat nicht mehr als 1 % freies monomeres Toluylendiisocyanat enthalten sollen, wie sie in DE-PS 26 41 380 beschrieben sind.

In den erfindungsgemäßen Mischungen werden Triphenylmethantriisocyanat (A) und das Trimerisationsprodukt (B) im Bereich der Gewichtsverhältnisse A:B = 4,37:1 bis 0,136:1, vorzugsweise A:B = 2,31:1 bis 0,257:1 eingesetzt.

Die erfindungsgemäße Verwendung der Isocyanatmischungen richtet sich auf die Vernetzung von polymeren Klebstoffen, insbesondere solchen auf Basis von Natur- und Synthesekautschuk. Vorzugsweise handelt es sich um lösemittelhaltige Klebstoffe.

Beispiele für geeignete Synthesekautschuk-Typen sind Polymerisate von Dienen wie Butadien mit einfach olefinisch ungesättigten Verbindungen wie z.B. Styrol, Acrylnitril, Methacrylnitril oder anderen Vinylderivaten, Polyhydroxypolyether oder Polyhydroxypolyester oder daraus hergestellte Polyurethane oder Polymerisate bzw. Mischpolymerisate des 2-Chlorbutadien-1,3 mit anderen polymerisierbaren olefinisch ungesättigten Monomeren. Bevorzugte Polymere für die Klebstoffe sind die zuletzt genannten Polymerisate bzw. Mischpolymerisate des 2-Chlorbutadien-1,3, insbesondere jedoch lineare oder weitgehend lineare Hydroxylpolyurethane, die aus Estern aus aliphatischen oder aromatischen Dicarbonsäuren mit Alkandiolen bzw. Lactonen, insbesondere Caprolacton, und aromatischen oder aliphatischen Diisocyanaten, insbesondere Diisocyanatotoluolen, 4,4'-Diisocyanatodiphenylmethan oder Hexamethylendiisocyanat hergestellt worden sind.

Je nach Basis-Polymer kommen für diese Klebstoffe als Lösemittel u.a. aliphatische Kohlenwasserstoffe, z.B. Benzin, aromatische Kohlenwasserstoffe, z.B. Toluol, Chlorkohlenwasserstofe, z.B. Methylenchlorid, Trichlorethylen, Ester, wie z.B. Ethylacetat, Ketone wie z.B. Aceton, Methylethylketon oder Gemische dieser Lösemittel in Betracht. Zur Modifizierung ihrer klebtechnischen Eigenschaften können die Klebstoffe neben den polymeren Bindemitteln, z.B. zur Erzielung einer besonders lange andauernden Kontaktklebrigkeit oder zur Erhöhung der Kohäsionsfestigkeit noch weitere Stoffe z.B. Naturharze, modifizierte Naturharze (z.B. Kollophoniumester), oder synthetische Harze (z.B. Phthalatharze) oder auch andere Polymere wie z.B. Chlorkautschuk oder lösliche Polymerisate oder Mischpolymerisate des Vinylacetats oder anderer Vinylverbindungen enthalten.

Bei der erfindungsgemäßen Verwendung der Isocyanatmischungen kommen diese vorzugsweise mit 6 bis 20 Gewichtsteilen und 100 Gewichtsteile Klebstoffpolymer zum Einsatz. Um eine schnelle und homogene Verteilung zu gewährleisten ist es zweckmäßig, die erfindungsgemäßen Isocyanatmischungen zu 10 bis 50 Gew.-% in geeigneten Lösemitteln gelöst den Klebstoffpolymeren zuzusetzen, welche ihrerseits im allgemeinen als 10 bis 30 %ige Lösungen zur Anwendung kommen. Geeignete Lösemittel sind z.B. Dichlormethan, Ethylacetat.

EP 0 499 113 A2

Die mit den erfindungsgemäßen Isocyanatmischungen vernetzten Klebstoffe eignen sich zum Kleben beliebiger Werkstoffe gleicher oder verschiedener Art, z.B. Leder, Textilien, Kunststoffen, Metallen oder Holz, vorzugsweise von Weich-Polyvinylchlorid-Materialien und Gummi.

Der Gegenstand der vorliegenden Erfindung soll anhand der folgenden Beispiele noch näher erläutert werden.

Beispiele

1. Eingesetzte Produkte

1.1. Bestandteile der Vernetzerisocyanat-Mischung

A: 4,4',4''-Triisocyanatotriphenylmethan 27 %-ige Lösung in Ethylacetat, Isocyanatgehalt der Lösung: 9.3 %

B: Trimerisationsprodukt von 2,4-Toluylendiisocyanat mit einem Gehalt an Trisisocyanato-monoisocyanurat von ca. 60 % nach DE-PS 2641380, als 35 %- ige Lösung in Ethylacetat. Isocyanatgehalt der Lösung: 7 %


                              Lösung              Feststoff


Beispiel 1: A + B =    0 + 100 =      35 Gew.-Teile
            nicht erfindungsgemäßes Vergleichs-
            beispiel!

Beispiel 2: A + B =   15 +   85 =   4.05 + 29.75 Gew.-
                                                 Teile

Beispiel 3: A + B =   25 +   75 =   6.75 + 26.25 Gew.-
                                                 Teile

Beispiel 4: A + B =   50 +   50 = 13.50 + 17.50 Gew.-
                                                 Teile

Beispiel 5: A + B =   75 +   25 = 20.25 +  8.75 Gew.-
                                                 Teile

Beispiel 6: A + B =   85 +   15 = 22.95 +  5.25 Gew.-
                                                 Teile


Beispiel 7: A + B = 100 +   0 =     27 Gew.-Teile
            nicht erfindungsgemäßes Vergleichs-
            beispiel!


Beispiele  8 - 14: wie Beispiele 1 - 7

Beispiele 15 - 21: wie Beispiele 1 - 7

Beispiele 22 - 28: wie Beispiele 1 - 7


1.2 Klebstoffe

Lösungen von Hydroxylpolyurethanen in Methylethylketon. Die Herstellung der verwendeten Hydroxylpolyurethane kann nach den zum Beispiel in DE-OS 37 170 70 beschriebenen Methoden erfolgen.

Beispiele 1 - 14: Hydroxylpolyurethan H1. Zusammensetzung von H1: Umsetzungsprodukt eines Esterdiols auf Basis Adipinsäure und Butandiol (MW = 2250) mit 2,4-Toluylendiisocyant; Verhältnis

3

NCO/OH = 0.99.

Beispiel 15 - 28: Hydroxylpolyurethan H2. Zusammensetzung von H2: Umsetzungsprodukt eines Esterdiols auf Basis Adipinsäure und Ethandiol (MW = 2000) mit 2,4-Toluylendiisocyant; Verhältnis NCO/OH = 0.99.

Konzentration der Lösungen von H1 und H2 in Methylethylketon: 20 Gew.-%

1.3 Klebesubstrate

P:      Mit 30 Gew.-% Dioctylphtalat weichgemachtes PVC für die Beispiele 1 - 7

N:      Nora-Testgummi (SBR) Prüfsubstrat des PFI (Pirmasens) Hersteller: Fa. Carl Freudenberg, Weinheim, BRD.

für die Beispiele 8 - 14, 15 - 21, 22 - 28

2. Herstellung der Vernetzerisocyanat - Klebstoff - Lösung: In die Vorlage von 100 g der 20 Gew.%-igen Lösungen der Hydroxylpolyurethane H1 bzw. H2 werden X Gew.-Teile der Lösungen der Vernetzerisocyanate homogen eingerührt.

Beispiel 1 - 14:      100 Gew.-Teile Lösung von H1
                      5 Gew.-Teile der Vernetzerisocyanat-Lösungen

Beispiel 15 - 21:     100 Gew.-Teile Lösung von H2
                      5 Gew.-Teile der Vernetzerisocyanat-Lösungen

Beispiel 22 - 28:     100 Gew.-Teile Lösung von H2
                      10 Gew.-Teile der Vernetzerisocyanat-Lösungen

Diese auf Lösungen bezogenen Mischungsverhältnisse entsprechen den folgenden Festoffverhältnissen:

| Beispiele | Hydroxylpolyurethan (fest) (Gew.-Teile) | Isocyanat (fest) (Gew.-Teile) |
|---|---|---|
| 1, 8, 15 | 100 | 8.75 |
| 2, 9, 16 | 100 | 8.45 |
| 3, 10, 17 | 100 | 8.25 |
| 4, 11, 18 | 100 | 7.25 |
| 5, 12, 19 | 100 | 7.50 |
| 6, 13, 20 | 100 | 7.05 |
| 7, 14, 21 | 100 | 6.75 |
| 22 | 100 | 17.5 |
| 23 | 100 | 16.9 |
| 24 | 100 | 16.5 |
| 25 | 100 | 15.5 |
| 26 | 100 | 15.0 |
| 27 | 100 | 14.1 |
| 28 | 100 | 13.5 |

3. Auftrag der Vernetzerisocyanat-Klebstoff-Lösung Die unter 2. hergestellte Vernetzerisocyanat-Klebstoff-Mischung wird mittels Pinsel mit einer Dicke von ca. 20 bis 30 g/qm auf das Substrat aufgetragen.

4. Durchführung der Verklebung

Die Verklebung erfolgt in Anlehnung an DIN 53 273 mit Klebstoffauftrag auf beiden zu verbindenden Substratoberflächen. Die Wärmeaktivierung (Temperatur des Klebefilms: ca. 80°C) wird nur an einer der beiden zu verklebenden Substratoberflächen durchgeführt. Innerhalb von 10 Sekunden nach der Entnahme aus dem Aktiviergerät werden die beiden Klebeflächen aneinandergelegt und mit einem Druck von 0,4 N/qmm verpreßt.

5. Prüfung

Zur Ermittlung der Trennfestigkeit wird der Schälwiderstand im Schälversuch nach DIN 53 273 bestimmt.

Beispiele 1-14: Messung sofort nach Verklebung.

Beispiele 15-28: Nach Verklebung 1 Stunde bei 50°C aushärten und anschließend sofort ohne Abkühlung im Schälversuch prüfen.

6. Ergebnisse der Messungen

Beispiele 1-14

Klebstoff-Polymer: Hydroxylpolyurethan H1

EP 0 499 113 A2

Meßgröße: Schälfestigkeit sofort nach der Verklebung
Dimension: N/mm

| Beispiel | Verhältnis Isocyanate A : B (Feststoffe) | Verhältnis H1 : Isocyanat (Feststoffe) | Substr. | Schälf. sofort nach Verklebung |
|---|---|---|---|---|
| 1 Vgl. | 100 % B | 100: 8,75 | N | 2,3 |
| 2 | 0,136: 1 | 8,45 | N | 2,3 |
| 3 | 0,257: 1 | 8,25 | N | 2,6 |
| 4 | 0,771: 1 | 7,75 | N | 3,0 |
| 5 | 2,314: 1 | 7,50 | N | 2,1 |
| 6 | 4,371: 1 | 7,05 | N | 1,7 |
| 7 Vgl. | 100 % A | 6,75 | N | 1,7 |
| 8 Vgl. | 100 % B | 100: 8,75 | P | 1,3 |
| 9 | 0,136: 1 | 8,45 | P | 1,7 |
| 10 | 0,257: 1 | 8,25 | P | 2,0 |
| 11 | 0,771: 1 | 7,75 | P | 3,6 |
| 12 | 2,314: 1 | 7,50 | P | 3,2 |
| 13 | 4,371: 1 | 7,05 | P | 1,0 |
| 14 Vgl. | 100 % A | 6,75 | P | 1,0 |

Beispiele 15-28
Klebstoff-Polymer: Hydroxylpolyurethan H2
Meßgröße: Schälfestigkeit nach 1 Stunde Aushärtung bei 50°C ohne Abkühlung
Dimension: N/mm

| Beispiel | Verhältnis Isocyanate A : B (Feststoffe) | Verhältnis H2 : Isocyanat (Feststoffe) | Substr. | Schälf.sofort nach 1 h Aushärt. bei 50°C (o.Abkühl.) |
|---|---|---|---|---|
| 15 Vgl. | 100 % B | 100: 8,75 | N | 1,0 |
| 16 | 0,136: 1 | 8,45 | N | 1,1 |
| 17 | 0,257: 1 | 8,25 | N | 1,1 |
| 18 | 0,771: 1 | 7,75 | N | 1,5 |
| 19 | 2,314: 1 | 7,50 | N | 1,6 |
| 20 | 4,371: 1 | 7,05 | N | 1,1 |
| 21 Vgl. | 100 % A | 6,75 | N | 1,0 |
| 22 Vgl. | 100 % B | 100: 17,5 | N | 1,1 |
| 23 | 0,136: 1 | 16,9 | N | 1,0 |
| 24 | 0,257: 1 | 16,5 | N | 1,4 |
| 25 | 0,771: 1 | 15,5 | N | 2,0 |
| 26 | 2,314: 1 | 15,0 | N | 1,4 |
| 27 | 4,371: 1 | 14,1 | N | 1,5 |
| 28 Vgl. | 100 % A | 13,5 | N | 1,2 |

## Patentansprüche

1. Vernetzerisocyanate für polymere Klebstoffe, dadurch gekennzeichnet, daß Mischungen aus
   A) 4,4',4''- Triisocyanatotriphenylmethan
   und
   B) Trimerisationsprodukten des 2,4-Toluylendiisocyanats mit einem Gehalt an Trisisocyanatomonoisocyanurat von mindestens 50 % und einem Gehalt an freiem Toluylendiisocyanat von weniger als 1 %
   eingesetzt werden.

2. Vernetzerisocyanat-Mischung nach Anspruch 1, dadurch gekennzeichnet, daß die Isocyanate A und B

5

im Mischungsverhältnis A:B = 4,37:1 bis 0,136:1, vorzugsweise im Verhältnis A:B = 2,31:1 bis 0,257:1 in inerten Lösungsmitteln gelöst eingesetzt werden.

3.  Verwendung der Vernetzerisocyanat-Mischungen nach Anspruch 1 oder 2 zur Vernetzung von Klebstoffen, dadurch gekennzeichnet, daß in Lösung, bezogen auf 100 Gew.-Teile des Klebstoffpolymers, 3 bis 25 Gew.-Teile, vorzugsweise 6 bis 20 Gew.-Teile der Vernetzerisocyanatmischungen zum Einsatz kommen.

4.  Verwendung der Vernetzerisocyanatmischungen nach Anspruch 3, dadurch gekennzeichnet, daß die eingesetzten Klebstoffpolymere Natur- und Synthesekautschuke, vorzugsweise Hydroxypolyurethane oder Polychloroprene sind,

5.  Verwendung der Mischungen aus Klebstoff- und Vernetzerisocyanat-Lösungen zum Verbinden von Teilen aus Gummi, Leder, Kunststoffen und Metallen.